# EUROPÄISCHE PATENTSCHRIFT

(11) **EP 1 447 679 B1**
(45) Veröffentlichungstag und Bekanntmachung des Hinweises auf die Patenterteilung: **13.09.2006**
(21) Anmeldenummer: 04002890.4
(22) Anmeldetag: 10.02.2004
(51) Int. Cl.: G01S 11/12, G01B 7/12, G01B 11/10, B61L 25/02, B61L 1/00

(54) **Vorrichtung und Verfahren zur Messung des Abstandes zweier Punkte eines Messobjekts, insbesondere zur Messung des Raddurchmessers eines schienengebundenen Fahrzeugrades**
Apparatus and method for measurement of the distance between two points of an object, particularly for measurement of the diameter of a railway vehicle wheel
Dispositif et procédé pour mesurer la distance entre deux points d'un objet, en particulier pour mesurer le diamètre d'une roue d'un véhicule ferroviaire

(30) Priorität: 13.02.2003 DE 10305923
(43) Veröffentlichungstag der Anmeldung: 18.08.2004
(73) Patentinhaber: Schenck Process GmbH, 64293 Darmstadt (DE)
(72) Erfinder: Ehmke, Fritz, 64397 Modautal (DE)
(74) Vertreter: Behrens, Helmut

(56) Entgegenhaltungen:
- EP-A- 0 212 052
- DE-A- 10 114 482
- DE-C- 10 064 598
- US-A- 3 767 146
- US-A- 4 155 526
- US-A- 5 636 026
- PATENT ABSTRACTS OF JAPAN Bd. 006, Nr. 027 (P-102), 17. Februar 1982 (1982-02-17) & JP 56 148003 A (UNIVERSAL KIKI KK), 17. November 1981 (1981-11-17)
- DATABASE WPI Section PQ, Week 198801 Derwent Publications Ltd., London, GB; Class Q21, AN 1988-005635 XP002282224 -& SU 1 311 980 A (URALS RAILWAY TRANS) 23. Mai 1987 (1987-05-23)

## Beschreibung

Die Erfindung betrifft eine Vorrichtung zur Messung des Raddurchmessers eines schienengebundenen Fahrzeugrades, gemäß dem Oberbegriff des Patentanspruchs 1.

Eine derartige Einrichtung dient insbesondere zur berührungslosen Messung einer Strecke an einem Geräte- oder Fahrzeugteil. Dies kann die Länge des Geräteteils oder auch der Durchmesser eines Fahrzeugrades sein, dessen Kennwert für die Sicherheit einer Anlage oder eines Systems von Bedeutung ist. Denn beim Betrieb von Eisenbahnen ist es für die Sicherheit des Schienenverkehrs und die Langlebigkeit einer Gleisstrecke notwendig, dass die darauf verkehrenden Fahrzeuge eine vorgegebene maximal zulässige Rad- und Achslast nicht überschreiten, die im wesentlichen von der Tragkraft der Räder abhängt. Diese Rad- und Achslasten werden heute häufig durch eine Überfahrtwägung auf der Gleisstrecke erfasst und gegenüber den angegebenen Werten überwacht. Gerade im internationalen Zugverkehr fahren aber sehr unterschiedliche Fahrzcug- und Waggontypen auf der Gleisstrecke, die auch unterschiedliche zulässige Achslasten aufweisen. Dazu ist es aber notwendig, dass man während der Wägung den jeweiligen Fahrzeugtyp und dessen zulässige Rad- und Achslasten kennt. Bei einem vorbeifahrenden Zugverbund müssen deshalb vorher die Typenbezeichnungen der einzelnen Waggons in der Auswertevorrichtung der Gleiswaage eingegeben werden, um daraus die einzelnen maximal zulässigen Rad- oder Achslasten bestimmen zu können. Dies erfordert einen hohen bürokratischen oder manuellen Aufwand und ist bei der reinen Überwachungswägung auf einem Fahrgleis kaum durchführbar.

Es ist bekannt, die Typerkennung von Eisenbahnwaggons durch eine automatisierte Feststellung von deren Achsabständen vorzunehmen. Dies ist während der Überfahrt durch einfache Schicnenschalter oder auch mit Hilfe des Zeitabstandes zwischen den Radaufstandssignalen auf der Gleiswaage möglich. Allerdings werden heute verstärkt Unterflurwaggons zum Lkw-Transport eingesetzt, deren Achsabstände mit anderen Waggontypen vergleichbar sind, aber zu denen abweichende zulässige Rad- und Achslasten aufweiten.

Die Erfassung eines sicherheitsrelevanten Kennwerts in Form der berührungslosen Messung des Durchmessers eines Fahrzeugrades ist aus der JP 56-148003 A bekannt. Darin ist eine Messvorrichtung zur Messung der Durchmesserdifferenzen zwischen dem linken und dem rechten Fahrzeugrad eines Schienengebundenen Fahrzeugs offenbart. Dabei wird jedes der zu messenden Fahrzeugräder beim Eintreten in einen Messabschnitt zunächst entmagnetisiert und nach dem Durchfahren eines Startsensors wird eine Magnetisierungsvorrichtung aktiviert. Durch diese Magnetisierungsvorrichtung wird eine Stelle am Radumfang mit einer starken Magnetisierung markiert. Nach einer Radumdrchung wird dann die markierte Stelle in einem Aufnchmerbereich entlang jeder Schiene erfasst. Dazu sind entlang der Schiene eine Vielzahl einzelner Magnetisterungsaufnehmer in einem vorbcstimmten Abstand voneinander angeordnet, die jeweils mit einer separaten Leitung mit einer Verstärker- und Komparatorschaltung verbunden sind. Beim Abrollen des Schienenrades mit der magnetisierten Stelle wird diese dann offensichtlich von einem dcr Magnetisierungsaufnehmer erfasst, der einen vorgegebenen Abstand vom Magnetisierungssensor auiweist. Aus der Abrolllänge bis zu dem Abstand des jeweiligen Magnetisierungssensors werden dann durch die Komparatorschaltung die beiden Raddurchmesser ermittelt und daraus dessen Differenz gebildet. Eine derartige Durchmessermessvorrichtung ist durch die Vielzahl der Magnetisierungsaufnehmer und dessen Verbindungsleitungen sehr aufwändig und bei einer Anordnung im normalen Gleisbett müssten die vieladrigen Verbindungsleitungen besonders gegen Störungen, Feuchtigkeit und Beschädigungen geschützt werden.

Der Erfindung liegt deshalb die Aufgabe zugrunde, Kennwerte eines fahrenden Schienenfahrzeug zu ermitteln, aus denen eindeutig maximal zulässige Rad- oder Achslasten ableitbar sind.

Diese Aufgabe wird durch die im Patentanspruch 1 angegebene Erfindung gelöst. Wellerbildungen und vorteilhafte Ausführungsbeispiele der Erfindung sind in den Unteransprüchen anqegeben.

Die Erfindung basiert auf der Erkenntnis, dass die maximal zulässige Rad- oder Achslast im wesentlichen durch die jeweilige Radgröße bestimmbar ist. Deshalb ist durch eine einfache Radgrößenfeststellung die jeweilige maximal zulässige Rad- bzw. Achslast vorgegeben und kann durch einen einfachen Vergleich mit der festgestellten Rad- bzw. Achslast überwacht werden. Es ist zwar denkbar, die Kadgröße durch eine manuelle Längenmessung durchzuführen, die ist allerdings nur bei stehenden Schienenfahrzeugen möglich. Deshalb ist es erstrebenswert, die Radgröße durch ein automatisiertes Messverfahren während der Überfahrt auf der Gleisstrecke durchzuführen.

Es sind zwar optische Messverfahren bekannt, durch die eine berührungslose Längenmessung möglich ist, die bisher aber zur Radgrößenfeststellung an rollenden Schienenrädern noch nicht eingesetzt wurden. Aus der DE 195 20 167 A1 ist eine derartige optische Längenmessung nach dem Laufzeitverfahren bekannt. Dazu wird von einem in einem Gehäuse angeordneten Lichtsender Lichtimpulse durch eine Linsenanordnung ausgesendet. Diese treffen außerhalb des Gehäuses auf ein beabstandetes Segment eines Messobjekts, das die Lichtstrahlen reflektiert und auf eine im Gehäuse angeordnete Empfängerlinse auftreffen lässt, in einer elektronischen Auswertevorrichtung wird aus der Differenzzeit zwischen dem Aussenden und dem Empfangen der elektromagnetischen Lichtstrahlen unter Berücksichtigung der Referenzstrecke im Gehäuse der Abstand des Messobjekts oder seines Segments von dem Messgerätegehäuse errechnet. Da ein vorbeirollendes Schienenrad über keine reflektierenden Messoberflächen verfügt, dic den Durchmesser des Rades in Messrichtung begrenzen, kann mit dieser Einrichtung die Radgröße eines schienengebundenen Fahrzeugs nicht erfasst werden.

Aus der EP 0 442 985 B1 ist eine berührungslos arbeitende Vorrichtung zur linearen Abstandsmessung oder Längenmessung nach dem magnetorestriktiven Messprinzip bekannt. Dazu ist ein Positionsaufnehmer vorgesehen, durch den der Abstand zweier Messpunkte an einem Messobjekt ermittelbar ist. Dabei besteht der Positionsaufnehmer aus einem Aufnehmerkopf, der mit einem langgestreckten rohrförmigen Teil verbunden ist, in dem ein Wellenleiter angeordnet ist, der entlang einer zu messenden Strecke verläuft. Parallel zum rohrförmigen Teil ist ein Magnetkopf vorgesehen, der vom Messobjekt oder einem Segment des Messobjekts parallel zum Rohr verschiebbar ist, wodurch der Abstand zwischen dem Punkt des Magnetkopfs am rohrförmigen Körper und einem zweiten oder Referenzpunkt, den die Gehäusewand des Aufnehmerkopfs darstellt, ermittelbar ist. Die Abstandsmessung erfolgt deshalb zwischen dem Aufnehmergehäuse oder einem Referenzpunkt und der jeweiligen Position des Magnetkopfes. Dazu wird von einer Sendeeinrichtung im Aufnehmerkopf ein Stromimpuls auf den Wellenleiter gegeben, der aus einem magnetorestriktiven Material besteht und deshalb um den Wellenleiter eine elektromagnetische Welle ausbildet. Durch den Magnetkopf wird die elektromagnetische Welle so beeinflusst, dass im Wellenleiter am Punkt des Magnetkopfes eine Verformung bzw. Torsion entsteht, die eine Reflektion der Welle bewirkt. Die zurücklaufende welle wird im Aufnehmerkopf in einer Empfangsvorrichtung in ein elektrisches Signal umgewandelt, das dem Abstand zwischen dem Aufnehmerkopf und dem Magnetkopf proportional ist. Da bei der Durchfahrt eines Zugverbandes der Magnetkopf vom Rad oder Teilen des Rades linear nicht verschoben werden kann, ist mit einem derartigen Positionsaufnehmer eine Radgrößenfeststellung während des Fahrtzustandes nicht durchführbar.

Die Erfindung hat den Vorteil, dass durch die berührungslose Abtastung eines vorgegebenen Abrollwinkels auf dem Radkranz oder Radreifen auf einfache Weise auch bei der Überfahrt berührungslos ein Kennwert für den Raddurchmesser ermittelbar ist. Da jedem ermittelten Raddurchmesser eine maximal zulässige Radlast zugeordnet werden kann, muss nicht für jeden Fahrzeugtyp die zugehörige vorgegebene Rad- oder Achsbelastung aus einer Vielzahl von Möglichkeiten ermittelt werden. Deshalb ist mit einer derartigen Vorrichtung auch bei einer schnellen Überfahrt die zulässige Achs- oder Radbelastung schnell ermittelbar und ist in Verbindung mit einer Radlastermittlung durch einen einfachen Vergleich überwachbar. Eine derartige berührungslos arbeitende Raddurchmessererfassung ist vorteilhafterweise auch weitgehend verschleiß- und wartungsfrei, so dass eine sichere und dauerhafte Betriebsweise gewährleistet ist. Da mit einer derartigen berührungslosen Raddurchmesserfeststellunq auch der zeitliche Abstand zu den nachfolgenden Rädern erhassbar ist, hat die Erfindung auch den Vorteil, dass sie auch den Abstand, die Durchfahrgeschwindigkeit, den Waggontyp als auch rutschende Fahrzeugräder ermitteln kann.

Durch die Ermittlung der Radgröße ergeben sich auch die Abstände der Lager und Bremsen von der Schiene oder vorgegebenen Temperaturaufnehmern, so dass daraus vorteilhafterweise auch die genaue Lager- und Bremstemperatur ermittelbar ist. Mit einer derartigen Messvorrichtung sind vorteilhafterweise auch die Anzahl der Achsen oder die Räder eines gesamten Zugverbandes zählbar, woraus auch eine Entgleisung oder ein fehlender Waggon ableitbar ist.

Die Erfindung wird anhand eines Ausführungsbeispiels, das in der Zeichnung dargestellt ist, näher erläutert. Es zeigt:

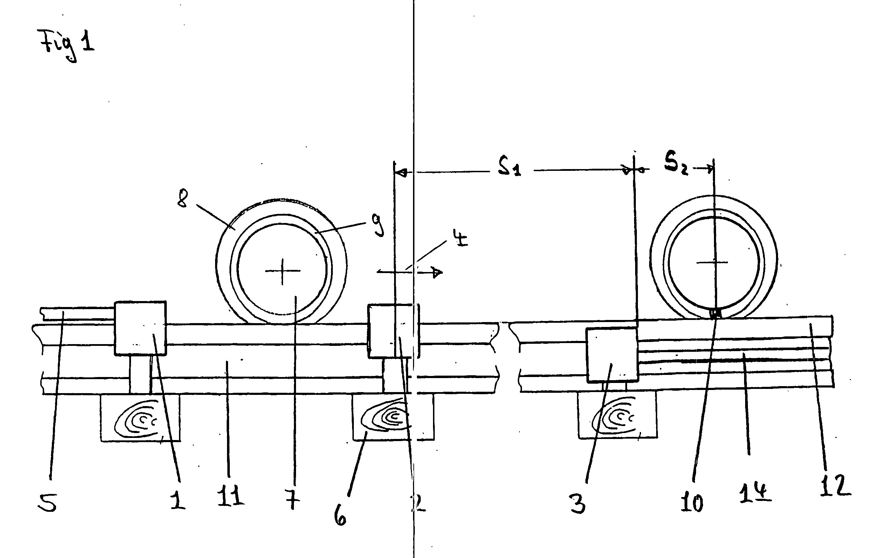

- Fig. 1:: eine schematische magnetorestriktive Raddurchmessermessvorrichtung.

In Fig. 1 der Zeichnung ist eine magnetorestriktive Raddurchmessermessvorrichtung schematisch dargestellt, durch die der Abstand zwischen den Umfangssegmenten 10 eines Abrollwinkels eines schienengebundenen Fahrzeugrades 7 von 360° gemessen wird, mit dessen Hilfe in einer Auswertevorrichtung der jeweilige Raddurchmesser errochenbar ist und zur Festlegung der Achs- bzw. Radlast dient.

Die magnetorustriktive Raddurchmessermessvorrichtung besteht im wesentlichen aus einer Entmagnetisierungs- 1, einer Magnetisierungs- 2 und einer Positionserfassungsvorrichtung 3, durch die die Länge einer vorgegebenen Abrollstrecke eines magnetisierten Segments 10 am Umfang eines schienengebundenen Fahrzeugrads 7 erfasst wird. Dazu ist in Laufrichtung 4 des Fahrzeugrades vor der Magnetisierungs- 2 und der Positionserfassungsvorrichtung 3 die Entmagnetisierungsvorrichtung 1 angeordnet. Vorzugsweise wird diene neben dem Schienenkopf 12 beabstandet montiert und enthält in einem längsgerichteten Gehäusekörper 5 eine Spulenanordnung, die ein magnetisches Wechselfeld erzeugt. Sobald das zu messende Fahrzeugrad 7 als Messobjekt an diesem magnetischen Wechselfeld vorbeirollt, wird in seinem ferromagnetischen Radkranz 8 bzw. Radreifen 9 ein darin vorhandener Restmagnetismus beseitigt. Dabei wird das Wechselfeld vorteilhafterweise auf einer Länge einer Radumdrehung angeordnet, um über den gesamten Umfang des Radreifens 9 bzw. des Radkranzes 8 den Restmagnetismus zu beseitigen. Die Entmagnetisierungsvorrichtung 1 kann aber auch dem gesamten Raddurchmesser gegenübergestellt werden und so während des Vorbeifahrens das Rad auf kurzer Strecke entmagnetisieren.

Nachfolgend ist auf der nächsten Schwelle 6 die Magnetisierungsvorrichtung 2 befestigt, die einen starken Elektromagneten enthält, der beim Vorbeifahren des Fahrzeugrades 7 ein Magnetisierungsimpuls erzeugt. Dabei ist dieser Magnetisierungsimpuls gezielt auf ein Teilsegment 10 des Radreifens 9 gerichtet und magnetisiert diesen auf einem umfangssegment von ca. 5 mm. Dieses Umfangssegment 10 rollt sich beim Vorbeifahren des Fahrzeugrades 7 mit einer Winkelgeschwindigkeit auf der Schiene 11 ab und trifft bei einem Abrollwinkel von 360° wieder auf dem Schienenkopf 12 auf. Deshalb ist in einem Abstand von ca. 2 bis 4 in von der Magnetisierungsvorrichtung 2 die Positionserfassungsvorrichtung 3 angeordnet. Dies ergibt sich aus üblichen Radgrößen von derzeit 690 bis 1.250 mm Durchmesser, die eine Abrollänge von ca. 2 bis 4 m aufweisen. Die Magnetisierungs- 2 und Positionserfassungsvorrichtung 3 kann aber auch in einem gemeinsamen Gehäuseteil vorgesehen werden.

Diese magnetorestriktive Positionserfassungsvorrichtung 3 enthält einen Aufnehmerkopf, an dem ein rohrförmiger Messstab 14 angeordnet ist, der sich auf einer Länge von ca. 2m längs der Schiene 12 erstreckt und an dieser oder den Schwellen 6 befestigt ist. Der Messstab 14 besteht aus einem magnetorestriktivcn oder ferromagnetischen Wellenleiter, der in einem Schutzrohr des Messstabs 14 angeordnet ist. Der Wellenleiter ist im Aufnehmerkopf miL einer Sendevorrichtung verbunden, die einen Impulsgenerator enthält, der bei einer Aktivierung einen Stromimpuls in den Wellenleiter einspeist. Dabei wird die Sendevorrichtung bei einer Überfahrt eines Fahrzeugrades 7 durch einen Schienenschalter aktiviert und sendet in regelmäßigen Abständen Stormimpulse auf den Wellenleiter. Trifft nun das magnetisierte Umfangssegment 10 des Radreifens 9 nach einer Abrollstrecke von 360° wieder auf dem Gleiskopf 12 auf, so beeinflusst diese magnetische Wirkung auch den neben der Schiene 11 angeordneten Wellenleiter. Denn durch die Sendevorrichtung wird durch den Stromimpuls um den Wellenleiter ein elektromaqnetisches Feld erzeugt, das mit einer elektromagnetischen Welle entlang des Wellenleiters verläuft. Trifft nun diese elektromagnetische Welle auf das vom Umfangssegment 10 auf den Schienenkopf 12 übertragene Magnetfeld, so wird an dieser Stelle im Wellenleiter eine Verdrehung bzw. eine Torsion bewirkt. Diese Torsionswirkung führt zu einer Reflektion der elektromagnetischen Welle auf dem Wellenleiter, die im Aufnehmerkopf von einer Empfangsvorrichtung erfasst wird.

Diese Empfangsvorrichtung besteht im wesentlichen aus einem Signalumformer, der oberhalb des Wellenleiters angeordnet ist, und aus einem Dauermagnet, einem ferromagnetischen Metallstreifen und einer diesen umgebenden Detektionsspule besteht. Durch die reflektierte elektromagnetische Welle entsteht im Metallstreifen eine Permeabilitätsänderung, die in der Detektionsspule zu einem elektrischen Signal umgewandelt wird. Dieses elektrische Antwortsignal bzw. Messsignal erfolgt in einer Laufzeit, die der Strecke S₂ bzw. Länge zwischen dem Anfangspunkt der Positionserfassungsvorrichtung 3 als ersten- oder Referenzpunkt und der Auftreffstelle des magnetisierten Umfangssegments als zweiten Punkt des Fahrzeugrades als Messobjekt proportional ist. Dadurch wird durch die Positionserfassungsvorrichtung 3 entlang der Schiene 11 im Grunde eine Längenmessung durchgeführt.

Der Signalumformer in der Empfangsvorrichtung ist mit einer elektronischen Auswertevorrichtung verbunden, die aus dem elektrischen Messsignal zunächst den Abrollweg zwischen dem Endpunkt des Aufnehmerkopfgehäuses als Referenzpunkt des Mcssobjekts und der Auftreffstelle des magnetisierten Radsegments 10 als zweiten Punkt des Messobjekts 7 errechnet. In der Auswertevorrichtung zwischengespeichert ist zusätzlich noch die Strecke S₁ zwischen dem Magnetisierungspunkt als ersten Punkt des Messobjekts und dem Endpunkt des Aufnchmerkopfgehäuses als Referenzpunkt eingegeben, die der ermittelten Messstrecke S₂ hinzuaddiert wird und damit dem erfassten Radumfang eines Abrollwinkels von 360° entspricht. Die Auswertevorrichtung ermittelt damit die Abrollstrecke des magnetisierten Radumfangssegments 10 von einem Referenzpunkt am Radumfang 1.0 bzw. von einer vorgesehenen Stelle der Magnetisierungsvorrichtung 2 an der Schiene 11 und einem Abrollwinkel von 360° beim Wiederauftreffen des magnetisierten Radumfangssegments 10 auf der Schiene 11 als zweiten Punkt am Messobjekt. Da zur eigentlichen Festlegung der zulässigen Rad- bzw. Achslast der Raddurchmesser bzw. die Radgröße benötigt wird, errechnet die elektronische Auswertevorrichtung aus dem Radumfang einen Kennwert für den Raddurchmesser in Millimetern.

Diese Kennwerte werden in einer Speichervorrichtung der Auswertevorrichtung zwischengespeichert und mit zugeordneten maximal zulässigen Rad- bzw. Achslastwerten verknüpft. Bei einer vorteilhaften Verbindung der Raddurchmessermessvorrichtung mit einer Überfahrtwägevorrichtung kann auf einfache weise die Einhaltung der zulässigen Rad- bzw. Achslasten überwacht, angezeigt und auch signalisiert werden.

Aus dem bekannten zeitlichen Abstand während des Überrollens des Fahrzeugrades 7 und der Abrollstrecke ermittelt die Auswertevorrichtung gleichzeitig auch die Überfahrgeschwindigkeit, die vorteilhafterweise mit maximal zulässigen Überfahrgeschwindigkeiten verglichen werden kann. Daraus sind gleichzeitig auch die Achsabstände eines Waggons bzw. Fahrzeugs ableitbar, durch die die Auswertevorrichtung auch gleichzeitig den Waggontyp ermittelt. Bei einer bevorzugten Ausgestaltung wird bei der Überfahrt eines gesamten Zugverbandes gleichzeitiq auch die Anzahl der Achsen gezählt und mit einer vorgegebenen Anzahl verglichen, woraus die Entgleisung einzelner Achsen oder der Verlust eines oder mehrerer Waggons abgeleitet und signalisiert werden kann. Des weiteren vergleicht die Auswertevorrichtung auch gleichzeitig die ermittelten Radumfangswerte eines Fahrzeugs miteinander und stellt bei Abweichungen einzelner Räder eine Blockierung oder ein Rutschen des abwcichenden Rades fest. Aus den ermittelten einzelnen Raddurchmessern kann durch Vergleich mit vorgegebenen Solldurchmessern auch die Abnutzung bzw. Einhaltung der zulässigen Toleranzwertc überwacht werden.

Die Auswertevorrichtung kann vorteilhafterweise auch mit vorgesehenen Temperaturaufnehmern zur Feststellung der Bremsund/odcr Lagertemperatur genutzt werden. Bei der genauen Feststellung der Lager- und Bremsenüberhitzung bzw. deren Temperatur ist es notwendig, den Abstand zwischen den Temperaturaufnehmern an der Gleisstrecke und den zu messenden Bauteilen zu kennen. Dies kann zwar nach einer Typerkennung aus vorgegebenen Werten abgeleitet werden, ist aber vorzugsweise auch mit Hilfe der Raddurchmessermessvorrichtung ermittelbar. Da sich die Abstände der Bremsscheiben bzw. der Lager im wesentlichen aus dem Raddurchmesser ergeben, wird der Abstand zur Schiene 11 bzw. zu den ortsfesten Temperaturauinehmern auf einfache Weise durch den ermittelten Raddurchmesser abzüqlich der Anteile der Lagerdurchmesser bzw. der Bremsscheibindurchmesser errechnet und mit den entsprechend aufgenommenen Temperaturwerten verknüpft.

Im Anschluss an die Überfahrt über die Positionserfassungsvorrichtung 3 kann gleichzeitig eine weitere Entmagnetisierungsvorrichtung 1 vorgesehen werden, die den Restmagnetismus in der Schiene 11 und im Fahrzeugrad beseitigt, damit diese nicht nachfolgende Messungen beeinträchtigen.

## Patentansprüche

1. Vorrichtung zur berührungslosen Messung des Raddurchmessers eines schienengebundenen Fahrzeugrades (7), mit einer Magnetisierungsvorrichtung (2), die so gesteuert ist, dass sie beim Vorbeirollen eines ferromagnetischen Fahrzeugrades (7) einen Magnetimpuls erzeugt, der mindestens ein Segment (10) des Radreifens (9) oder des Radkranzes (8) magnetisiert und die eine Positionserfassungsvorrichtung (3) enthält, die entlang mindestens einer Schiene (11) angeordnet ist und durch die die Länge der Abrollstrecke nach 360° Abrollwinkel des magnetisierten Segments (10) am Umfang des schienengebundenen Fahrzeugrades erfasst wird, **dadurch gekennzeichnet, dass** die Positionserfassungsvorrichtung (3) als magnetorestriktive Positionserfassungsvorrichtung ausgebildet ist, die eine Sendevorrichtung enthält, die in einem Aufnehmerkopf einem Aufnehmerkopf mittels eines elektrischen Impulsgenerators einen Stromimpuls erzeugt, der in einem damit verbundenen Messstab (14) angeordneten Wellenleiter eine elektromagnetische Welle erzeugt, die entlang eines Schienenabschnitts im Wellenleiter verläuft und um diesen ein Magnetfeld ausbildet und dass im Aufnehmerkopf eine Empfangsvorrichtung angeordnet ist, die einen Signalumformer enthält, der die am Messort vom magnetisierten Umfangssegment (10) am Auftreffpunkt auf der Schiene (11) reflektierten elektromagnetischen Welle in ein elektrisches Signal umwandelt, das zur Ermittlung des kennwertes für den Raddurchmesser dient.

2. Vorrichtung nach Anspruch 1, **dadurch gekennzeichnet, dass** die Magnetisierungsvorrichtung (2) an der Gleisinnen- oder Gleisaußenseite nahe dem Schienenkopf (12) angeordnet ist, wobei dessen Magnetfeld auf ein Segment (10) eines vorbeirollenden Radreifens (9) oder Radkranzes (8) gerichtet ist.

3. Vorrichtung nach Anspruch 1 oder 2, **dadurch gekennzeichnet, dass** der Signalumformer einen Dauermagneten und einen Metallstreifen aus magnctorestriktiven oder ferromagnetischen Material enthält, der an einer Detektionsspule angebracht ist und die die vom Messort des Messobjekts reflektierte Welle in ein elektrisches Signal umwandelt.

4. Vorrichtung nach einem der vorhergehenden Ansprüche, **dadurch gekennzeichnet, dass** eine elektrische Auswertevorrichtung vorgesehen ist, die aus dem elektrischen Signal des Signalumformers den Radumfang und/oder den Durchmesser des vorbeirollenden Fahrzeugrades errechnet.

5. Vorrichtung nach Anspruch 4, **dadurch gekennzeichnet, dass** die Auswertevorrichtung so ausgebildet ist, dass jedem ermittelten Raddurchmesser vorgegebene maximal zulässige Rad- oder Achslasten zugeordnet und anzeigbar sind.

6. Vorrichtung nach einem der vorhergehenden Ansprüche, **dadurch gekennzeichnet, dass** die Auswertevorrichtung mit einer Rad- oder Achslastwaage verbunden ist und mit Hilfe der ermittelten Rad- oder Achslasten durch einen Vergleich mit der zugeordneten Rad- oder Achslast die Überwachung einer Gleisstrecke durchführt und bei einer ermittelten Überschreitung diese anzeigt und/oder signalisiert.

7. Vorrichtung nach einem der vorhergehenden Ansprüche, **dadurch gekennzeichnet, dass** die Auswertevorrichtung so ausgebildet ist, dass sie aus der Abrollstrecke eines Radumfangs von 360° und dessen Zeitdauer von einem oder mehreren Fahrzeugrädern (7) die Zuggeschwindigkeit, den Achsabstand, die Anzahl der Räder bzw. Achsen, den Fahrzeugtyp und/oder eine Entgleisung eines Fahrzeugrades (7) ermittelt.

8. Vorrichtung nach einem der vorhergehenden Ansprüche, **dadurch gekennzeichnet, dass** die Auswertevorrichtung so ausgebildet ist, dass sie aus dem ermittelten Radumfang oder Raddurchmesser und den Signalen von vorgesehenen Tempcraturaufnehmern die Achs- oder Bremstemperatur von überfahrenden Fahrzeugachsen ermittelt.

## Claims

1. Device for non-contact measurement of the wheel diameter of a wheel of a rail-mounted vehicle (7), comprising a magnetization device (2) which is controlled in such a way that it generates, when a ferromagnetic vehicle wheel (7) rolls past it, a magnetic pulse magnetizing at least one segment (10) of the wheel tyre (9) or the wheel flange (8), and which comprises a position sensor device (3) arranged alongside at least one rail (11), which measures the length of the rolling section of the magnetized segment (10) after a rolling angle of 360° at the circumference of the wheel of the rail-mounted vehicle, **characterized in that** the position sensor device (3) is designed as a magnetorestrictive position sensor device comprising a transmitter device which generates, by means of an electric pulse generator, a current pulse in a senor head, which in turn generates, in a waveguide arranged within a connected measuring rod (14), an electromagnetic wave which runs along a rail section in the waveguide and produces a magnetic field around the latter, and **in that** in the sensor head, a receiver device is arranged, which comprises a signal converter, which converts the electromagnetic wave reflected by the magnetized circumferential segment (10) at the point where the segment hits the rail (11), which is the measuring point, into an electrical signal, which is used for determination of the characteristic value for the wheel diameter.

2. Device according to claim 1, **characterized in that** the magnetization device (2) is arranged on the inside or the outside of the track close to the rail head (12), the magnetic field of which is directed towards a segment (10) of a tyre (9) or wheel flange (8) rolling past.

3. Device according to claim 1 or 2, **characterized in that** the signal converter comprises a permanent magnet and a metal strip made of magnetorestrictive or ferromagnetic material, which is attached to a detection coil and converts the wave reflected by the measuring point of the measuring object into an electrical signal.

4. Device according to one of the preceding claims, **characterized in that** an electrical evaluation device is provided, which calculates the wheel circumference and/or the diameter of the passing vehicle wheel based on the electrical signal of the signal converter.

5. Device according to claim 1, **characterized in that** the evaluation device is designed in such a way that each wheel diameter which has been determined is assigned a preset maximum admissible wheel or axle load which may be indicated.

6. Device according to one of the preceding claims, **characterized in that** the evaluation device is connected to a wheel or axle load weighing system and monitors a track section by comparing the determined wheel or axle loads with the assigned wheel or axle load values and indicates and/or signals any exceedance.

7. Device according to one of the preceding claims, **characterized in that** the evaluation device is designed in such a way that it determines the train speed, the wheel base, the number of wheels/axles, the vehicle type and or/a derailment of a vehicle wheel (7) for one or several vehicle wheels (7), based on the rolling section of a wheel circumference of 360° and its duration.

8. Device according to one of the preceding claims, **characterized in that** the evaluation device is designed in such a way that it determines the axle or brake temperature of vehicle axles passing over it, based on the determined wheel circumference or wheel diameter and the signals of provided temperature sensors.

## Revendications

1. Dispositif de mesure sans contact du diamètre d'une roue/un galet de véhicule sur rail (7), dotée d'un dispositif de magnétisation (2), piloté de telle manière qu'au passage d'une roue ferromagnétique (7) elle produit une impulsion magnétique, magnétisant au moins un segment (10) du pourtour de la roue (cerceau ?) (9), ou de la couronne de la roue (du cerceau ?) (8), et qui contient un dispositif de reconnaissance (saisie) de position (3), fixé le long d'un rail (11) au moins, et qui, par un angle de déroulement de 360° du segment magnétisé (10) saisit le périmètre de la roue/galet. Le dispositif est **caractérisé par le fait que** le dispositif de détermination de position (3) est conçu magnéto restrictif, contenant un dispositif émetteur qui, par une tête de lecture et au moyen d'un générateur d'impulsions électriques, produit une impulsion électrique qui génère une onde électromagnétique, dans un conducteur d'ondes situé dans une barre de mesure (14) disposée parallèlement à un tronçon de rail, en formant un champ magnétique le long de ce tronçon de rail, ainsi que **par le fait qu'**un dispositif récepteur est placé dans la tête de lecture, contenant un transformateur de signal qui, au lieu de mesure du segment de périmètre magnétisé (10), retransforme l'onde électromagnétique réfléchie à partir du point de contact sur le rail (11) en un signal électromagnétique servant à définir la valeur nominale du diamètre de la roue (du galet).

2. Dispositif selon la revendication 1, **caractérisé en ce que** le dispositif de magnétisation (2) est placé près de la face interne ou externe du rail, proche de la tête de rail, cependant que son champ magnétique est dirigé vers un segment (10) d'un cerceau de galet (9) ou d'une couronne de roue (8) en cours de roulage.

3. Dispositif selon les revendications 1 et 2, **caractérisé en ce que** le convertisseur de signal contient un aimant permanent ainsi qu'une bande métallique composée d'un matériau magnéto restrictif ou ferromagnétique, fixé à une bobine de détection, et qui transforme l'onde réfléchie à partir du lieu de mesure en un signal électrique.

4. Dispositif selon une des revendications précédentes, **caractérisé en ce qu'**un dispositif électrique d'analyse des données est prévu, qui permet de calculer à partir du signal électrique le diamètre et/ou le périmètre d'un galet de véhicule passant en roulage.

5. Dispositif selon la revendication 1, **caractérisé en ce que** le dispositif d'analyse des données est conçu de manière à ce qu'à chaque diamètre/périmètre de roue/galet calculé soient attribuées et indiquées les charges maximales admissibles sur les roues/galets et les essieux.

6. Dispositif selon une des revendications précédentes, **caractérisé en ce que** le dispositif d'analyse des données est relié un dispositif de pesée des charges sur essieux et roues/galets, ce qui permet à l'aide des charges constatées, au moyen d'une comparaison avec les charges admissibles attribuées aux roues/galets et essieux, d'assurer le contrôle d'une portion de voie, de manière à ce qu'un dépassement constaté de ces charges admissibles soit indiqué et/ou signalé.

7. Dispositif selon une des revendications précédentes, **caractérisé en ce que** le dispositif d'analyse des données est conçu de manière à ce que, par le déroulement d'un périmètre de roue/galet sur 360° ainsi que par sa durée (phase/fréquence), sur une ou plusieurs roues/galets (7), puissent être déterminés la vitesse du convoi, l'écartement des essieux, le nombre de roues/galets ainsi que des essieux, le type de véhicule et/ou un déraillement d'une roue/galet (7).

8. Dispositif selon une des revendications précédentes, **caractérisé en ce que** le dispositif d'analyse des données est conçu de manière à déterminer, sur la base du périmètre ou diamètre de roue/galet constaté, ainsi que par les signaux émis par des capteurs de température prévus, la température d'essieux et de freinage des essieux au roulage passant au-dessus.
